(19) Europäisches Patentamt
European Patent Office
Office européen des brevets

(11) Veröffentlichungsnummer: **0 295 430 B1**

(12) **EUROPÄISCHE PATENTSCHRIFT**

(45) Veröffentlichungstag der Patentschrift: **05.08.92**

(51) Int. Cl.[5]: **C08F 38/02**, C08F 6/00, C08F 8/00

(21) Anmeldenummer: **88107663.2**

(22) Anmeldetag: **13.05.88**

# (54) Verfahren zur Herstellung von praktisch unvernetzten Polyacetylenen in Filmform.

(30) Priorität: **21.05.87 DE 3717067**

(43) Veröffentlichungstag der Anmeldung: **21.12.88 Patentblatt 88/51**

(45) Bekanntmachung des Hinweises auf die Patenterteilung: **05.08.92 Patentblatt 92/32**

(84) Benannte Vertragsstaaten: **BE CH DE ES FR GB IT LI NL SE**

(56) Entgegenhaltungen:
**DE-A- 3 237 941**
**DE-A- 3 628 080**

(73) Patentinhaber: **BASF Aktiengesellschaft**
**Carl-Bosch-Strasse 38**
**W-6700 Ludwigshafen(DE)**

(72) Erfinder: **Naarmann, Herbert, Dr.**
**Haardtblick 15**
**W-6719 Wattenheim(DE)**
Erfinder: **Theophilou, Nicolas, Dr University of Pennsylvania**
**Dept. of Chemistry Chemistry Building**
**Philadelphia, PA 19104(US)**

EP 0 295 430 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von praktisch unvernetzten Polyacetylenen in Filmform durch Polymerisation von Acetylen mit einem flüssigen Katalysatorsystem aus organischen Aluminiumverbindungen und Titanestern in Form von Lösungen in viskosen inerten Flüssigkeiten auf einem Substrat, auf welchem die Katalysatorlösung aufgebracht ist.

Außerdem betrifft die Erfindung Verbundmaterialien aus einem faser- oder flächenförmigen, nichtleitendem Trägermaterial und dem darauf aufgebrachten Acetylenpolymerisat.

Aus Arbeiten von Shirakawa et al. ist bekannt, daß die Polymerisation von Acetylen mit titan- und aluminiumorganischen Verbindungen als Katalysatorsystem in Toluol bei -76 ° C mechanisch feste Filme aus Polyacetylen liefert (s. z.B. Journal of Polymer Science, Poly. Chem. Ed. 12 (1974), Seite 11 bis 20).

Aus der EP-A 88 301 ist ein Verfahren zur Herstellung mechanisch fester Polyacetylenfilme in genügender Schichtstärke beschrieben, bei dem ein Katalysatorsystem aus aluminium- und titanorganischen Verbindungen in einem Lösungsmittel bestimmter Viskosität eingesetzt wird. Diese Katalysatorlösung wird zur Herstellung von Polyacetylenfilmen auf festen Trägermaterialien eingesetzt.

Derartige Polyacetylenfilme können zur Erhöhung der Leitfähigkeit mit üblichen Dotierungsmitteln, z.B. mit Iod oder Arsenpentafluorid dotiert werden.

Die beschriebenen Verfahren sind technisch jedoch wenig brauchbar, da die hiernach erhaltenen Filme recht unterschiedliche Schichtdicken aufweisen, wodurch sich mangelnde Transparenz und Reproduzierbarkeit sowie geringe mechanische Stabilität bei der Verarbeitung als Nachteile ergeben.

Des weiteren ist aus den Patentschriften DE-A-31 20 441, DE-A-31 43 868, DE-A-32 07 857 und DE-A-36 14 502 die Verwendung von Trägerflächen aus Metall, Kunststoffolien, Glas und Fasern (in Form von Geweben, Netzen) bekannt.

Bei den oben beschriebenen Verfahren sind jedoch nur relativ geringe Leitfähigkeiten erreichbar, da die Trägerflächen entweder nicht reckbar sind oder die Filme nicht mehr vom Substrat abgezogen werden können.

Außerdem hat es sich gezeigt, daß die bekannten Verfahren zur Herstellung von Polyacetylenfilmen zu Polymerisaten führen, die infolge merklicher Vernetzung selbst nach Dotierung mit Leitfähigkeitsverbesserern nur ungenügende Leitfähigkeiten aufweisen.

Es bestand daher die Aufgabe, homogene, praktisch unvernetzte, mechanisch feste, hochleitfähige und gegebenenfalls transparente Polyacetylene als Filme mit genügender Schichtdicke oder in Verbindung mit geeigneten Substraten als Verbundstoffe herzustellen.

Demgemäß wurde ein Verfahren zur Herstellung von praktisch unvernetzten Polyacetylenen in Filmform durch Polymerisation von Acetylen mit einem flüssigen Katalyatorsystem aus organischen Aluminiumverbindungen und Titanestern in Form von Lösungen in viskosen inerten Flüssigkeiten auf einem Substrat, auf welchem die Katalysatorlösung aufgebracht ist, gefunden, welches dadurch gekennzeichnet ist, daß man das Polymere im Anschluß an die Polymerisation mit einem starken Reduktionsmittel behandelt, welches sich gegenüber dem aluminiumorganischen Katalysatorbestandteil inert verhält, das Polymere gewünschtenfalls reckt und durch Waschen mit einer Flüssigkeit von Katalysator- und Reduktionsmittelrückständen befreit und in an sich bekannter Weise zur Erhöhung der Leitfähigkeit mit einem starken Elektronenakzeptor oder -donator dotiert, trocknet und die so erhaltenen Materialien gewünschtenfalls mit einer Schicht oder Hülle aus nichtleitendem Material überzieht.

Nach dem erfindungsgemäßen Verfahren kann das Acetylen bei (-10) bis 100, besonders zwischen 10 und 50 ° C polymerisiert werden.

Die Polymerisation erfolgt zweckmäßigerweise in einer Inertgasatmosphäre, z.B. unter Argon oder Stickstoff.

Als organische Aluminiumverbindungen kommen Alkylverbindungen des Typs

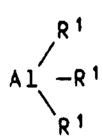

in Betracht, wobei $R^1$ für gleiche oder verschiedene $C_1$-$C_{20}$-, vorzugsweise $C_1$-$C_5$-Alkylgruppen steht, wobei die Ethylgruppe besonders bevorzugt ist.

Als Titanester eignen sich alle Titan(III)- und Titan(IV)-Verbindungen des Typs $Ti(OR^2)_4$ und $Ti(OR^2)_3$, wobei $R^2$ für gleiche oder verschiedene Alkylgruppen mit 1 bis 20, vorzugsweise 4 bis 12 C-Atomen steht;

besonders bevorzugt ist hierunter die Butylgruppe.

Näheres zum Katalysatorsystem ist der DE-A-29 12 572 und der Druckschrift H. Naarmann, Angewandte Macromolekulare Chemie 109/110 (1982), Seite 295 bis 338 zu entnehmen.

Das Mengenverhältnis von Aluminium- zu Titanverbindung liegt bevorzugt zwischen 0,5:1 und 2:1, vorzugsweise bei 1:1.

Beide Komponenten werden in einem inerten viskosen Lösungsmittel gelöst, dessen Viskosität vorzugsweise zwischen 5 und 50.000, insbesondere zwischen 1000 und 45000 mPa•s liegt (gemessen bei 20°C mit einem Haake-Rotationsviskosimeter VD 180).

Als derartige Lösungsmittel eignen sich beispielsweise Siliconöle, Polyisobutene und Polybutadiene, wobei das Molgewicht der Polymeren zwischen 3000 und 100.000, vorzugsweise zwischen 5000 und 30.000 beträgt. Besonders bevorzugt ist der Zusatz von Siliconöl beim erfindungsgemäßen Verfahren, wobei die Menge bevorzugt zwischen 20 und 80 Gew.% beträgt.

Besonders empfiehlt es sich, das Katalysatorsystem vor Gebrauch im viskosen Lösungsmittel für etwa 20 bis 100 min auf 100 bis 200°C zu erhitzen.

Hierdurch wird die Bildung des hochaktiven Komplexes zwischen Al/Ti bewirkt. Alle Operationen führt man zweckmäßigerweise unter Inertgas, z.B. Argon, durch, da die Katalysatoren sehr oxidationsempfindlich sind.

Zur Ausführung des erfindungsgemäßen Verfahren bringt man die Katalysatorlösung unter Inertgasatmosphäre auf das Substrat auf, und anschließend ersetzt man die Inertgasatmosphäre durch eine Acetylen-Atmosphäre, unter der die Polymerisation stattfindet. Hierzu arbeitet man zweckmäßig in einer sog. Glovebox.

Die Polyacetylenfilme werden auf Trägerflächen erzeugt. Als Träger kommen dabei insbesondere die in der eingangs zitierten Literatur erwähnten Materialien wie Metalle, Metallfolien, vorzugsweise Folien aus nicht leitenden Kunststoffen wie Polyamiden, Polyestern und Polyolefinen auf Basis von Polyethylen, Polypropylen oder Polybutadien in Betracht.

Weitere bevorzugte Träger sind Fasern und Bänder aus nicht-leitenden Kunststoffen wie Polyacrylnitril, Naturkautschuk, Seide und den oben genannten Kunststoffen, die gegebenenfalls vor der Polymerisation schon gereckt worden sind.

Der Durchmesser der bevorzugt parallel angeordneten Fasern beträgt 0,1 bis 100 µm, vorzugsweise 0,1 bis 50 µm.

Körper, deren Mantelflächen sich gewünschtenfalls in eine ebene Oberfläche überführen lassen, sind beispielsweise Zylinder.

Ein wesentliches Merkmal der Erfindung ist der Zusatz von 0,01 bis 10 Gew.%, bevorzugt 0,01 bis 1 Gew.% eines Reduktionsmittels nach erfolgter Polymerisation. Alle Reduktionsmittel sind geeignet, die nicht mit der aluminiumorganischen Komponente des Katalysatorsystems reagieren, also gegebenenfalls die obengenannten Aluminiumalkyle selbst.

Als Reduktionsmittel werden erfindungsgemäß Metalle oder metallorganische Verbindungen aus den Gruppen IA, IB, IIA, IIB, IIIA und IIIB des Perioden-Systems eingesetzt.

Besonders geeignet sind z.B. Kupfer, Silber- und Goldkomplexe, ferner Zink, Cadmium oder Quecksilberalkyle sowie Kronenetherkomplexe der Metalle IA, IIA und IIIB des Perioden-Systems. Weiterhin kommen in Frage: Caesium und dessen Alkyl- bzw. Arylverbindungen, Gemische der metallorganischen Verbindungen, z.B. von Zinkalkylen mit Magnesiumalkylen, ferner Alkyle oder Aryle von Yttrium oder Lanthan, sowie Lithiumalkyle in Verbindung mit Zirkonhalogeniden, Wolframhalogeniden und Titantetrabenzyl.

Beispiele für geeignete Reduktionsmittel sind:

Borandimethylsulfid
Lithiumaluminiumhydrid
Diethylberyllium
Tributylbor
Tri-sek.-butylbor
Triethylbor
Triphenylbor
Allyllithium
n-Butyllithium
sek-Butyllithium
t-Butyllithium
Cyclopentadienyllithium
Phenyllithium

Propinyllithium
Triphenylsilyllithium
Biscyclopentadienylmagnesium
Diallylmagnesium
Dibutylmagnesium
Diethylmagnesium
Di-n-hexylmagnesium
Bis-(triphenylphosphin)-nickel-(II)-bromid
Bis-(triphenylphosphin)-nickel-dicarbonyl
Bis-(triphenylphosphit)-nickel-dicarbonyl
Tetrakis-(triethylphosphin)-nickel
Naphthalin-Kalium oder Naphthalin-Natrium
Anthracen-Kalium oder Anthracen-Natrium
Natrium-Suspensionen in Toluol.

Die Behandlung der polymeren Filme mit dem Reduktionsmittel hat zur Folge, daß das Polymere wesentlich weniger zur Vernetzung neigt, nachdem der Katalysator ausgewaschen ist, so daß die Leitfähigkeit nicht sinkt. Worauf dieser Effekt im einzelnen beruht, ist noch nicht bekannt, jedoch ist anzunehmen, daß durch das Reduktionsmittel aktive, die Vernetzung bewirkende Zentren desaktiviert werden.

Zur Erzielung noch höherer elektrischer Leitfähigkeiten werden die erfindungsgemäßen Polyacetylene gereckt, d.h. in einer Richtung gestreckt. Der Polyacetylenfilm kann dazu entweder vom Subtrat abgezogen oder je nach Verwendungszweck auf dem Substrat gereckt werden. Dabei steigt die elektrische Leitfähigkeit mit zunehmender Streckungsrate stetig an. Unter Streckungsrate s wird hierbei das Verhältnis

$$s = \frac{L - L_o}{L_o}$$

verstanden, wobei $L_o$ die Ausgangslänge des Polyacetylenfilms und L die Länge des Polyacetylenfilms nach vorgenommener Streckung darstellen.

Die erzielbare Streckungsrate hängt zum einen von den Polyacetylenfilmen und deren mechanischen Eigenschaften, zum anderen vom verwendeten Trägermaterial ab. Im allgemeinen lassen sich Streckungsraten bis zu 600 %, vorzugsweise im Bereich von 100 bis 550 % erzielen. Bei Streckungsraten im Bereich von ca. 300 % lassen sich elektrische Leitfähigkeiten im Bereich von 100 000 bis mehr als 1 Million S/cm erzielen.

Parallel zur Zunahme der Leitfähigkeit im Streck- bzw. Orientierungsrichtung ist ein Abfall der elektrischen Leitfähigkeit senkrecht zur Streck-bzw. Orientierungsrichtung feststellbar, d.h. es tritt eine Anisotropie der elektrischen Leitfähigkeit auf. Der Anisotropiefaktor, d.h. das Verhältnis der elektrischen Leitfähigkeit in Orientierungsrichtung zur elektrischen Leitfähigkeit senkrecht zur Orientierungsrichtung, liegt im allgemeinen im Bereich von 3 bis 20, besonders von 5 bis 15. Als Faustregel kann gelten, daß die Leitfähigkeit in Orientierungsrichtung um etwa eine Größenordnung höher liegt als senkrecht zur Orientierungsrichtung.

Die Katalysator- und Reduktionsmittelrückstände können vor oder nach dem Reckprozeß ausgewaschen werden. Vorzugsweise wäscht man die Rückstände jedoch erst nach dem Recken aus, da sich dadurch praktisch unvernetzte Polyacetylenfilme ausbilden, die durch die geringe Anzahl an Vernetzungsstellen eine höhere Leitfähigkeit nach der Dotierung aufweisen.

Das Auswaschen kann z.B. mit Toluol oder Chlorwasserstoff enthaltendem Methanol erfolgen, wobei die Katalysatorreste aus dem Polyacetylenfilm entfernt werden. Üblicherweise werden hierfür die Polyacetylene für die Dauer von 1 bis 6 Stunden in Toluol oder einem anderen Lösungsmittel und/oder für die Dauer von 8 bis 24 Stunden mit Chlorwasserstoff enthaltendem Methanol gewaschen.

Besonders bevorzugt ist eine 100:2 vol.%ige Mischung aus Methanol/Eisessig, mit der sich innerhalb einer Stunde die Rückstände quantitativ auswaschen lassen. Anschießend wird unter einem Inertgas getrocknet. Die Trocknung kann gegebenenfalls auch im Vakuum erfolgen.

Danach wird das Polyacetylen nach bekannten Verfahren mit bekannten Dotierungsmitteln dotiert, wobei Elektronendonatoren oder Elektronenakzeptoren zur Erhöhung der Leitfähigkeit eingesetzt werden.

Die Dotierungsverfahren sind in der Literatur beschrieben in diesem Zusammenhang sei insbesondere auf die EP-A-36 118 verwiesen. Bevorzugt haben sich Iod und Arsenpentafluorid als Dotierungsmittel bewährt. Grundsätzlich können jedoch alle in der EP-A-36 118 aufgeführten Dotierungsmittel verwendet

werden.

Nach dem erfindungsgemäßen Verfahren können hochleitfähige Polyacetylene mit Leitfähigkeitswerten zwischen 20.000 bis mehrere Millionen S/cm erhalten werden. Derartige Polyacetylene haben also Leitfähigkeitswerte die im Bereich der Leitfähigkeiten von Metallen liegen.

Außerdem weisen die Acetylenpolymerisate eine genügend mechanisch stabile Schichtdicke auf, die zudem noch transparent ist. Die Filme lassen sich qualitativ mit hoher Reproduzierbarkeit herstellen und sind bei der Verarbeitung gut handhabbar.

Die erfindungsgemäß erhaltenen hochleitfähigen Polyacetylene können z.B. als elektrische Leiter, als Polarisatoren, als Lichtfilter, in Schaltern, als Reflektoren oder auch als Sensoren oder Abschirmmaterial Verwendung finden.

Beispiele

Beispiele 1 bis 5
Herstellung von Polyacetylenfilmen

Beispiel 1

Alle Arbeiten erfolgten in einer Stickstoffatmosphäre. Das Katalysatorsystem bestand aus:

| | |
|---|---|
| 50 ml | Silikonöl AV 1000 (Viskosität: 10000 mPa•s), |
| 15 g | Triethylaluminium (TEA) und |
| 25 g | Tetrabutoxytitanat |

Die Herstellung des Katalysatorsystems erfolgt auf in an sich bekannter Weise.

7 ml der Katalysatorlösung wurden in einem evakuierbaren Behälter auf eine 30 cm lange und 30 cm breite Polyethylenfolie (Stärke der Folie: 20 $\mu$m) aufgetragen.

Der Behälter wurde evakuiert, wonach 600 ml gasförmiges Acetylen über einen Zeitraum von 20 min. eingeleitet wurden. Man erhielt einen schwarzen homogenen Film, der mit 0,7 ml n-Butyllithium in Form einer 16,5 gew.%igen Lösung in n-Hexan als Reduktionsmittel behandelt wurde. Der Film wurde anschließend vom Substrat abgezogen und mit Toluol gewaschen, getrocknet und in üblicher Weise mit $I_2$ in $CCl_4$ dotiert.

Eigenschaften des Films:

a) Cis-Anteile der Polymerketten im Film nach Infrarotspektroskopieanalyse: 80 %
b) Leitfähigkeit des Films vor der Dotierung: $10^{-8}$ S $cm^{-1}$
c) $sp^3$-hydridisierter Kohlenstoffbetrag (nicht olefinisch gebundener Kohlenstoff) gemäß $C^{13}$ Kernresonanzspektroskopie (CXP 200 Bruker): 0 %
d) Kristallinität (Phillips Diffraktometer, Röntgenstrahlung Cu $K_\alpha$): 65 %
e) Die Mengen an Al, Ti und Si lagen unter 0,05 %.
f) Iodgehalt nach Dotierung: 70 Gew.%.
g) Leitfähigkeit nach Dotierung: 2000 S $cm^{-1}$.

Beispiel 2

Der nach Beispiel 1 erhaltene Film, der noch den Katalysator und das Reduktionsmittel enthielt, wurde auf 550 % gereckt, gewaschen und dotiert.

Die Leitfähigkeit betrug 18000 S/cm.

Beispiel 3

Entsprechend Beispiel 1; jedoch wurde der Film gewaschen und anschießend auf 550 % gereckt.

Die Leitfähigkeit betrug 2000 S/cm.

Beispiel 4

Arbeitsweise wie in Beispiel 2: Es wurden die eingesetzten Mengen des Reduktionsmittels n-Butyllithium verändert. Als Waschlösungsmittel diente Toluol.

Tabelle 1

| Nr. | Menge [ml]*) | Streckungsrate [%] | Leitfähigkeit [S cm⁻¹] |
|---|---|---|---|
| 1 | 1 | 400 | 46.850 |
| 1[a] | 1 | - | 3.000 |
| 2 | 2 | 400 | 120.000 |
| 2[a] | 2 | - | 5.000 |
| 3 | 3 | 400 | 170.000 |
| 3[a] | 3 | - | 34.000 |

*) bezogen auf 10 ml Katalysatorsystem

a zum Vergleich

Beispiel 5

Es wurde wie in Beispiel 4 gearbeitet, jedoch wurden statt n-Butyllithium andere Reduktionsmittel eingesetzt.

Tabelle 2

| Nr. | Reduktionsmittel | Menge [ml]*) | Leitfähigkeit [S $cm^{-1}$] |
|---|---|---|---|
| 4 | sek.-Butyllithium | 3 | 125.000 |
| 5 | tert.-Butyllithium | 3 | 118.000 |
| 6 | Propanyllithium | 3 | 108.000 |
| 7 | Dibutylmagnesium | 3 | 95.000 |
| 8 | Natrium-Suspension 12 %ig in Toluol | 5 | 114.000 |
| 9 | Bis-(Triphenylposphin)-Nickeldicarbonyl | 3 | 93.000 |

*) bezogen auf 10 ml Katalysatorsystem.

Beispiele 6 bis 13
Herstellung von Verbundfolien

Beispiele 6 bis 13
Herstellung von Verbundfolien

Beispiel 6

Alle Arbeiten erfolgten in einer Argonatmosphäre. Als Katalysatorsystem wurde eine Lösung aus

15 g Triethylaluminium (TEA)
21 g Tetrabutoxytitanat (IV) und
30 ml Silikonöl der Viskosität 15000 mPa•s

in bekannter Weise hergestellt.

10 ml dieser Katalysatorlösung wurden auf eine 30 cm lange und 30 cm breite Polyproylenfolie der Stärke 20 µm aufgetragen.

Der Behälter wurde evakuiert, wonach 600 ml in üblicher Weise gereinigtes gasförmiges Acetylen innerhalb von 6 min zudosiert wurden.

Es entstand auf der Oberfläche der Folie ein grüner homogener Polyacetylenfilm, der anschließend mit 1,2 g Dibutylmagnesium in 10 ml n-Hexan behandelt wurde. Die Verbundfolie wurde für 20 min im Reaktor belassen und danach auf eine Streckungsrate von 600 % gereckt. Die gereckte Verbundfolie wurde mittels Waschen mit Toluol von Katalysator- und Reduktionsmittelrückständen befreit und getrocknet.

Die Dotierung der Verbundfolie erfolgte mit einer gesättigten Lösung von $I_2$ in $CCl_4$. Nach dem Waschen mit $CCl_4$ und Trocknen wurde die Leitfähigkeit an 4 Proben gemessen. Es ergab sich ein Mittelwert von 85000 S $cm^{-1}$.

Beispiel 7 (zum Vergleich)

Ein entsprechend Beispiel 6 hergestellter Polyacetylenfilm, jedoch ohne Reduktionsmittelzusatz wurde sofort nach der Herstellung nach der Arbeitsweise, wie sie in Beispiel 6 beschrieben ist, gewaschen, so daß die Katalysatorreste entfernt werden. Danach wurde der Film auf 600 % orientiert. Anschließend wurde dotiert wie oben angegeben. Die Leitfähigkeit des dotierten Films betrug 7500 S/cm.

Beispiel 8

Es wurde wie in Beispiel 6 gearbeitet, jedoch als Trägerfolie eine Polyethylenfolie von 20 µm Dicke verwendet. Der Katalysator- und Reduktionsmittelreste enthaltende Polyacetylenfilm wurde auf 500 % gereckt. Nach dem Waschen und Dotieren wurde eine Leitfähigkeit von 110000 S/cm gemessen.

Beispiel 9

Es wurde wie in Beispiel 6 gearbeitet, jedoch als Reduktionsmittel anstelle von Dibutylmagnesium eine Mischung aus Dibutylzink und n-Butyllithium zugesetzt. Nach dem Recken, Auswaschen des Katalysators und Reduktionsmittels und Dotieren wurde eine Leitfähigkeit von 156.000 S/cm gemessen.

Wurde der Film nicht orientiert, so wurde eine Leitfähigkeit von 7500 S/cm ermittelt.

Wurde kein Reduktionsmittel zugegeben und durch Waschen unmittelbar nach dem Polymerisieren die Katalysatorrückstände entfernt, danach der Film gereckt und dotiert, wurde eine Leitfähigkeit von 8000 S/cm gemessen.

Beispiel 10

Anstelle des Dibutylmagnesiums wurde eine Mischung aus Dibutylmagnesium und Allylnickel als Reduktionsmittel eingesetzt. Die Leitfähigkeit des entsprechend der Arbeitsweise nach Beispiel 6 hergestellten Polyacetylenfilms betrug 250.000 S/cm.

Beispiel 11

Es wurde wie in Beispiel 6 beschrieben gearbeitet, jedoch wurde der Film auf beiden Seiten der Trägerfolie mit Katalysator versehen und dann mit Acetylen begast. Das erhaltene Produkt zeigte auf beiden Seiten eine Leitfähigkeit, die im Mittelwert von 8 Messungen bei 950 000 S/cm lag.

Beispiel 12

Arbeitsweise entsprechend Beispiel 6, jedoch wurde als Träger eine Polyethylenfolie hoher Dichte verwendet. Das Reduktionsmittel war n-Butyllithium. Der Film wurde auf 500 % gereckt. Die Leitfähigkeit des Films betrug nach Waschen und Dotieren 6000 S $cm^{-1}$.

Beispiel 13

Es wurde entsprechend Beispiel 12 gearbeitet, jedoch vor dem Recken gewaschen. Die Streckungsrate betrug 670 %. Der Film wies eine Leitfähigkeit von 8000 S $cm^{-1}$ auf.

Beispiel 14 bis 16
Herstellung von Verbundfasern

Beispiel 14

Entsprechend der Arbeitsweise wie in Beispiel 6 wurden verschiedene Trägerfasern aus nicht-leitendem Material mit einem Polyacetylenfilm umhüllt (siehe Tabelle 3).

Tabelle 3

| Trägerfaser | Durchmesser [µm] | Leitfähigkeit* S/cm$^{-1}$ | Streckungsrate [%] | Reduktionsmittel |
|---|---|---|---|---|
| Polypropylen | 1 | 200.000 (10) | 600 | Dibutylmagnesium |
| Polypropylen[a)] | 1 | 65.000 ( 4) | 600 | - |
| Polypropylen | 1 | 156.000 ( 4) | 600 | Dibutylzink/n-Butyllithium |
| Polypropylen[b)] | 1 | 7.500 ( 4) | - | - |
| Polypropylen[b)] | 1 | 8.000 ( 4) | 600 | Dibutylzink/n-Butyllithium |
| Polypropylen | 1 | 200.000 ( 4) | 600 | Dibutylmagnesium/Tetrakis-(Triethylphosphine) Nickel (0) |
| Polyester | 2 | 150.000 ( 5) | 500 | Dibutylmagnesium |
| Polyamid 6.6 | 0,5 | 75.000 ( 5) | 250 | Dibutylmagnesium |
| Polyisopren | 100 | 80.000 ( 5) | 280 | Dibutylmagnesium |
| Naturkautschuk | 80 | 150.000 ( 5) | 450 | Dibutylmagnesium |
| Seide | 0,7 | 120.000 ( 5) | 180 | Dibutylmagnesium |

*) In Klammern ist die Anzahl der Messungen zur Ermittlung der Leitfähigkeit angegeben.
a) Die beschichtete Faser wurde zuerst gewaschen und danach gereckt.
b) zum Vergleich

Beispiel 15

Das Katalysatorsystem aus Beispiel 6 enthielt zusätzlich 5 g Polybutadien (Molgewicht: 450.000) als viskositätserhöhenden Zusatz.

Als Reduktionsmittel wurden 1,3 ml n-Butyllithium in Form einer 16,5 gew.%igen Lösung in n-Hexan eingesetzt. Die Fasern wurden zur Verbesserung der Reproduzierbarkeit der Polyacetylenfilmdicke in einem aus Kern und Hülse bestehenden Zylinder aus Edelstahl so eingespannt und befestigt, daß sie parallel angeordnet waren. Entsprechend dieser Arbeitsweise ließen sich die Leitfähigkeiten der dotierten Verbundfasern besser reproduzieren.

Das Waschlösungsmittel war Methanol/Eisessig im Verhältnis 100:2.

Die Dicke der aufpolymerisierten Polyacetylenschicht wurde elektronenmikroskopisch bestimmt.

Tabelle 4

Verschiedene Verbundfasern und deren elektrische Leitfähigkeit

| Fasertyp | Faserdurchmesser [$\mu m$] | elektr. Leitfähigkeit (S $cm^{-1}$) | Streckungsrate [%] | Dicke der $(CH)_x$Schicht [$\mu m$] |
|---|---|---|---|---|
| Polyamid 6.6 | 30 | 120.000 | 300 | 1,2 |
| Polyamid 6.6 | 45 | 16.000 | 450 | 1,1 |
| Polyamid 6.12 | 30 | 15.000 | 300 | 2,5 |
| Polyester 1 | 25 | 10.000 | 300 | 2,0 |
| Polyester 2 | 25 | 8.000 | 100 | 1,9 |
| Polypropylen | 50 | 57.000 | 600 | 0,4 |
| Polyacrylnitril | 20 | 63.000 | 800 | 0,3 |

Polyester 1 bestehend aus: Polyethylenterephthalat

Polyester 2 bestehend aus: Polyethylenterephthalat

Beispiel 16

Herstellung einer Verbundfaser, deren Kern aus nicht-leitendem Material bereits vor der Polymerisation gereckt wurde

Ein Faserbündel aus Polyethylenterephthalat wurde bei 60 °C auf 750 % gereckt und anschließend im Hochvakuum abgekühlt. Entsprechend der Arbeitsweise in Beispiel 6 wurde das Faserbündel mit Katalysatorlösung behandelt, wobei auf 100 g Fasern 30 ml Katalysatorlösung verwendet wurden.

Die Leitfähigkeit nach der Dotierung einer Einzelfibrille betrug: 2600 S $cm^{-1}$.

## Patentansprüche

1. Verfahren zur Herstellung von praktisch unvernetzten Polyacetylenen in Filmform durch Polymerisation von Acetylen mit einem flüssigen Katalysatorsystem aus organischen Aluminiumverbindungen und Titanestern in Form von Lösungen in viskosen inerten Flüssigkeiten auf einem Substrat, auf welchem die Katalysatorlösung aufgebracht ist, dadurch gekennzeichnet, daß man das Polymere im Anschluß an die Polymerisation mit 0.01 bis 10 Gew.% eines Metalls oder einer metallorganischen Verbindung aus den Gruppen IA, IB, IIA, IIB, IIIA und IIIB des Periodensystems behandelt, das bzw. die sich gegenüber dem aluminiumorganischen Katalysatorbestandteil inert verhält, das Polymere gewünschtenfalls reckt und durch Waschen mit einer Flüssigkeit von Katalysator- und Reduktionsmittelrückständen befreit und in an sich bekannter Weise zur Erhöhung der Leitfähigkeit mit einem starken Elektronenakzeptor oder -donator dotiert, trocknet und die so erhaltenen Materialien gewünschtenfalls mit einer Schicht oder Hülle aus nicht-leitendem Material überzieht.

2. Verfahren nach Anspruch 1, dadurch gekennzeichnet, daß die Menge des zugesetzten Reduktionsmittels 0,01 bis 1,0 Gew.%, bezogen auf die Menge der Komponenten des Katalysatorsystems, beträgt.

3. Verfahren nach Anspruch 1, dadurch gekennzeichnet, daß man das Katalysatorsystem vor dem Aufbringen auf das Substrat erhitzt.

4. Verfahren nach den Ansprüchen 1 oder 2, dadurch gekennzeichnet, daß man als viskose, chemisch inerte Lösungsmittel solche einsetzt, die eine Viskosität von 5 bis 50.000 mPa•s aufweisen.

5. Verfahren nach den Ansprüchen 1 bis 4, dadurch gekennzeichnet, daß man als Substrat
   a) Träger mit einer ebenen Oberfläche oder Körper, deren Mantelflächen sich in ebene Oberflächen überführen lassen,
   b) Folien oder Bänder aus nicht-leitendem Material oder
   c) Fasern aus nicht-leitendem Material verwendet, die gewünschtenfalls vorher gereckt worden sind und

   im Falle a) den Polymerisatfilm vom Träger abzieht und in den Fällen b) und c) den Polymerisatfilm als Verbundmaterial auf dem Substrat beläßt.

6. Verfahren nach den Ansprüchen 1 bis 5, dadurch gekennzeichnet, daß man Film, Verbundfolie, -band oder -faser vor den Verfahrensschritten Trocknen und Dotieren reckt und wäscht.

7. Verbundfolien, -bänder, -fasern und -körper erhältlich nach dem Verfahren gemäß den Ansprüchen 1 bis 6.

## Claims

1. A process for the preparation of a virtually uncrosslinked polyacetylene in film form by polymerization of acetylene using a liquid catalyst system consisting of an organic aluminum compound and a titanate in the form of a solution in a viscous inert liquid on a substrate to which the catalyst solution has been applied, wherein, after the polymerization, the polymer is treated with from 0.01 to 10% by weight of a metal or organometallic compound of group IA, IB, IIA, IIB, IIIA or IIIB of the periodic table, which is inert to the organoaluminum catalyst component, the polymer is, if desired, oriented and is freed from residual catalyst and reducing agent by washing with a liquid, doped with a strong electron acceptor or electron donor in a conventional manner to increase the conductivity and dried, and the materials thus obtained are, if desired, covered with a layer or sheath of nonconductive material.

2. A process as claimed in claim 1, wherein the amount of reducing agent added is from 0.01 to 1.0% by weight, based on the amount of the components of the catalyst system.

3. A process as claimed in claim 1, wherein the catalyst system is heated before being applied to the substrate.

4. A process as claimed in claim 1 or 2, wherein the viscous, chemically inert solvent used is one which has a viscosity of from 5 to 50,000 mPa.s.

5. A process as claimed in claims 1 to 4, wherein the substrate used comprises
   a) substrates having a flat surface or bodies whose lateral surfaces can be converted into flat surfaces,
   b) films or belts of nonconductive material or
   c) fibers of nonconductive material, which may have been oriented beforehand,
   and

   in case a) the polymer film is removed from the substrate, and in cases b) and c) the polymer film is left on the substrate, as a composite material.

6. A process as claimed in claims 1 to 5, wherein the film, laminated film, laminated belt or composite fiber is oriented and washed before the drying and doping steps.

7. A laminated film, laminated belt, composite fiber or composite element obtainable by a process as

claimed in claims 1 to 6.

**Revendications**

1. Procédé de préparation de polyacétylènes pratiquement non ramifiés sous forme de film, par polymérisation d'acétylène avec un système catalytique liquide constitué par des composés organo-aluminiques et des esters de titane sous forme de solutions dans des liquides inertes visqueux, sur un substrat sur lequel la solution de catalyseur est appliquée, caractérisé en ce qu'à la suite de la polymérisation, le polymère est traité par 0,01 à 10% en poids d'un métal ou d'un composé organométallique des groupes IA, IB, IIA, IIB, IIIA et IIIB du système périodique ayant un comportement inerte à l'égard du constituant organo-aluminique du catalyseur, le polymère est au besoin étiré et débarrassé des résidus de catalyseur et de réducteur par lavage avec un liquide, il est dopé de façon connue en soi avec un accepteur ou donneur d'électrons fort pour accroître sa conductivité, il est séché et, au besoin, le matériau ainsi obtenu est revêtu d'une couche ou d'une gaine de matière non conductrice.

2. Procédé selon la revendication 1, caractérisé en ce que la quantité du réducteur ajouté s'élève à 0,01-1,0% en poids par rapport à la quantité des composants du système catalytique.

3. Procédé selon la revendication 1, caractérisé en ce qu'on chauffe le système catalytique avant de l'appliquer sur le substrat.

4. Procédé selon la revendication 1 ou 2, caractérisé en ce qu'on utilise, comme solvants chimiquement inertes visqueux, des solvants qui ont une viscosité de 5 à 50 000 mPa.s.

5. Procédé selon l'une quelconque des revendications 1 à 4, caractérisé en ce qu'on utilise, comme substrat,
   a) des supports ayant une surface plane ou des corps dont les surfaces d'enveloppe peuvent être transformées en surfaces planes,
   b) des feuilles ou des rubans en matière non conductrice ou
   c) des fibres en matière non conductrice qui ont été au besoin étirées au préalable, et

   dans le cas a), on détache du support le film de polymère, tandis que dans les cas b) et c), on laisse le film de polymère sur le substrat, constituant ainsi un matériau composite.

6. Procédé selon l'une quelconque des revendications 1 à 5, caractérisé en ce qu'avant les étapes de séchage et de dopage du procédé, on étire et on lave le film ou la feuille, le ruban ou la fibre composite.

7. Feuilles, rubans, fibres et corps composites, obtenus par le procédé selon l'une quelconque des revendications 1 à 6.